# EUROPEAN PATENT APPLICATION

(11) **EP 2 192 442 A1**
(43) Date of publication of application: **02.06.2010**
(21) Application number: 08752543.2
(22) Date of filing: 09.05.2008
(51) Int. Cl.: G02F 1/1368, G02F 1/1335, G02F 1/1343

(54) **DISPLAY DEVICE**

(30) Priority: 27.09.2007 JP 2007252180
(71) Applicant: Sharp Kabushiki Kaisha, Osaka-shi, Osaka 545-8522 (JP)
(72) Inventor: KAISE, Yasuyoshi, Osaka-shi, Osaka 545-8522 (JP); YOSHIDA, Keisuke, Osaka-shi, Osaka 545-8522 (JP); MAEDA, Kazuhiro, Osaka-shi, Osaka 545-8522 (JP)
(74) Representative: Müller - Hoffmann & Partner
(86) International application number: PCT/JP2008/058660
(87) International publication number: WO 2009/041112

(57) **Abstract**

The present invention relates to a display device capable of improving display qualities.

The present invention is a display device including:
pixels arrayed in a matrix pattern in n-rows and m-columns (n and m being each an integer of 2 or more);
n-source lines; and
m-gate lines,
the n-source lines and the m-gate lines being arranged in a lattice pattern,

wherein a configuration of a pixel in an odd-numbered row of the n-rows and a configuration of a pixel in an even-numbered row of the n-rows are in an inverse relationship,
the display device further includes a storage capacitor wiring shared between the pixel in the odd-numbered row and the pixel in the even-numbered row,
the storage capacitor wiring is arranged in a boundary region between the pixel in the odd-numbered row and the pixel in the even-numbered row, and
the storage capacitor wiring faces a storage capacitor electrode for the pixel in the odd-numbered row and a storage capacitor electrode for the pixel in the even-numbered row, each with an insulating film therebetween.

## Description

### TECHNICAL FIELD

The present invention relates to a display device. More particularly, the present invention relates to an active matrix driving display device in which a storage capacitor is formed in a pixel.

### BACKGROUND ART

An active matrix liquid crystal display device including TFTs (thin film transistors) as a switching element is known now. This liquid crystal display device includes a liquid crystal display panel including a liquid crystal layer interposed between two insulating substrates facing each other. On one of the two substrates, gate lines (scanning signal lines) and source lines (image signal lines) are arranged in a lattice pattern, and pixel electrodes for drawing an image are arranged in a matrix pattern. Near an intersection of the gate line and the source line, a TFT is arranged to control application of a voltage into the pixel electrode. On the other substrate, a common electrode for applying a voltage between itself and the pixel electrode is arranged. A liquid crystal capacitor is formed by the pixel electrode and the common electrode.

According to such a liquid crystal display device, the gate lines are selected one by one every horizontal scanning period. So application of a scanning signal to the gate line is repeated with a period of one vertical scanning. Therefore, charges accumulated in each liquid crystal capacitor formed by the pixel electrode and the common electrode need to be stored during almost one vertical scanning period. If the accumulated charges are not stored only by the liquid crystal capacitor, a storage capacitor is also formed along the liquid crystal capacitor. The storage capacitor is generally formed by a pixel electrode or a storage capacitor electrode electrically connected to a pixel electrode, and a storage capacitor wiring.

In a field of display devices such as a liquid crystal display device, pixels are more and more finely formed along with improvement in resolution and downsizing, and a need for a technique of increasing an aperture ratio of a pixel is now growing. As a technique of increasing an aperture ratio, Figs. 29 and 30 in Patent Document 1 discloses the following technique: with respect to a transparent dielectric layer that gives a difference in thickness of the liquid crystal layer between a reflective region and a transmissive region so that the thickness in the reflective region is smaller than that in the transmissive region, a transparent dielectric layer is formed in continuity over pixel regions adjacent in row and/or column directions.

Thus, while the increase in aperture ratio of the pixel is requested, the aperture ratio is decreased if a large storage capacitor is tried to be secured, generally. For this problem, Patent Document 2 discloses, as a technology of forming a storage capacitor without decreasing the aperture ratio, a technology of forming a storage capacitor by: an electrode wiring that is arranged between pixels in adjacent two rows; and an extended portion of a gate insulating film of a transistor and an extended portion of a semiconductor thin film of the transistor.
[Patent Document 1]
   Japanese Kokai Publication No. 2005-189351
[Patent Document 2]
   Japanese Kokai Publication No. Hei-02-176725

### DISCLOSURE OF INVENTION

However, Patent Document 2 discloses a configuration in which source lines, the number of which is twice that of columns of pixels, are arranged, and gate lines, the number of which is half that of rows of pixels, are arranged. In such a configuration, for an aperture ratio, rather than advantages due to the decrease in the number of gate lines, disadvantages due to the increase in the number of source lines are created. In such a point, this configuration has room for improvement. In addition, the source lines are arranged close to each other, which easily causes a short-circuit therebetween.

The present invention has been made in view of the above-mentioned state of the art. The present invention has an obj ect to provide a display device capable of improving display qualities.

The present inventors made various investigations on a way of improving display qualities of a high-definition display device, and noted arrangement of a storage capacitor wiring in the display device. Then, the inventors found the followings. If in a configuration where n-source lines and m-gate lines are arranged in a lattice pattern, a configuration of a pixel in an odd-numbered row and a configuration of a pixel in an even-numbered row are in an inverse relationship, with respect to a boundary line between these pixels, these pixels can be configured to share a storage capacitor wiring. As a result, an effect of increasing an aperture ratio, attributed to a decrease in the number of storage capacitor wirings, and an effect of decreasing electric resistance, attributed to an increase in line width of respective storage capacitor wirings, can be sufficiently exhibited. As a result, the above-mentioned problems have been admirably solved, leading to completion of the present invention.

That is, the present invention is a display device including:
pixels arrayed in a matrix pattern in n-rows and m-columns (n and m being each an integer of 2 or more);
n-source lines; and
m-gate lines,
the n-source lines and the m-gate lines being arranged in a lattice pattern,
wherein a configuration of a pixel in an odd-numbered row of the n-rows and a configuration of a pixel in an even-numbered row of the n-rows are in an inverse relationship,
the display device further includes a storage capacitor wiring shared between the pixel in the odd-numbered row and the pixel in the even-numbered row,
the storage capacitor wiring is arranged in a boundary region between the pixel in the odd-numbered row and the pixel in the even-numbered row, and
the storage capacitor wiring faces a storage capacitor electrode for the pixel in the odd-numbered row and a storage capacitor electrode for the pixel in the even-numbered row, each with an insulating film therebetween. The pixels arrayed in a matrix pattern may be pixels arranged in a delta pattern as long as they are arranged in row and column directions. The wirings (lines) may not be necessarily perpendicular to each other as long as the wirings are almost arranged in a lattice pattern in the whole region where the wirings are arranged.

The above-mentioned shared storage capacitor wiring is arranged to face a storage capacitor electrode for the pixel in an odd-numbered row with an insulating film therebetween to form a storage capacitor for the pixel in the odd-numbered row. Further, the above-mentioned shared storage capacitor wiring is arranged to face a storage capacitor electrode for the pixel in an even-numbered row with an insulating film therebetween to form a storage capacitor for the pixel in the even-numbered row. In other words, the above-mentioned shared storage capacitor wiring is shared between the pixel in the odd-numbered row and the pixel in the even-numbered row, and one storage capacitor wiring forms storage capacitors for the pixels in two rows. The storage capacitor wirings, which are conventionally arranged one for pixels in each row, are arranged one for the pixels in every two rows. Thus, the above-mentioned shared storage capacitor wiring is generally arranged in every other boundary region that is positioned in parallel, between the pixel in the odd-numbered row and the pixel in the even-numbered row. As a result, according to the present invention, the area of the region where the storage capacitor wiring is arranged is decreased, which leads to an increase in aperture ratio. Instead of or in addition to the decrease in such an area, the line width of the respective storage capacitor wiring is increased, and thereby electric resistance can be reduced, which leads to suppression of cross-talk, for example. In addition, the storage capacitor wiring is formed in a simplified pattern, which improves yield. In the present invention, at least one of the storage capacitor wiring and the storage capacitor electrode is preferably made of a light-shielding conductive material such as metal.

As a preferable embodiment of the present invention, an embodiment in which the storage capacitor electrode for the pixel in the odd-numbered row and the storage capacitor electrode for the pixel in the even-numbered row are aligned in series along an extending direction of the storage capacitor wiring is mentioned. According to this embodiment, the storage capacitor electrode for the pixel in the odd-numbered row and that for the pixel in the even-numbered row can be arranged to overlap with the storage capacitor wiring without increasing the line width of the storage capacitor wiring. Accordingly, this embodiment is preferably employed when an aperture ratio is increased by decreasing the area of the region where the storage capacitor wiring is arranged. The storage capacitor electrode may be arranged in a layer upper or lower than the storage capacitor wiring.

As another preferable embodiment of the present invention, an embodiment in which the display device includes a thin film transistor including a semiconductor layer in each pixel,
the semiconductor layer has a portion overlapping with any one of the m-gate lines,
the semiconductor layer for the pixel in the odd-numbered row and the semiconductor layer for the pixel in the even-numbered row are integrally formed and connected to any one of the n-source lines through a shared contact hole is mentioned. This embodiment can be adopted in a configuration where n-source lines are arranged for pixels in n-rows, and the pixels in the odd-numbered rows and the pixels in the even-numbered rows are connected to the same source line. According to this embodiment, the semiconductor layer for the pixel in the odd-numbered row and the semiconductor layer for the pixel in the even-numbered row are integrally formed, and thereby these semiconductor layers can be connected to the source line through the shared contact hole. Thus, the pixels in the odd-numbered and even-numbered rows share the same contact hole, and thereby the number of the contact holes canbe decreased. The aperture ratio canbe further increased in the present invention.

Examples of a preferable embodiment of the above-mentioned shared contact hole include an embodiment in which the shared contact hole is arranged in a boundary region between the pixel in the odd-numbered row and the pixel in the even-numbered row, where the storage capacitor wiring is not arranged. In the present invention, the storage capacitor wiring, which is conventionally arranged for the pixels in each row, can be arranged for the pixels in every two rows. As a result, a region between the pixel in the odd-numbered row and the pixel in the even-numbered row, where no storage capacitor wiring is arranged, can be utilized. The above-mentioned shared contact hole is arranged in this region, which can increase the aperture ratio compared with a case where a contact hole is arranged in another region of each pixel.

The above-mentioned shared contact hole may be one or two or more for one semiconductor layer. One contact hole conventionally needs to be arranged in each pixel, but if one contact hole is formed for one semiconductor layer, the number of the contact holes can be decreased by half because the semiconductor layer is integrally formed over the pixels in the odd-numbered and even-numbered rows. As a result, the aperture ratio can be increased. If two or more contact holes are formed for one semiconductor layer, the reduction in aperture ratio can be suppressed, and further connection reliability can be improved with efficiency, compared with the case where two or more contact holes that are connected to the semiconductor layer individually formed in each pixel are formed.

As another preferable embodiment of the display device of the present invention, an embodiment in which the display device includes an additional circuit shared between the pixel in the odd-numbered row and the pixel in the even-numbered row, and
the additional circuit being arranged in a boundary region between the pixel in the odd-numbered row and the pixel in the even-numbered row, where the storage capacitor wiring is not arranged is mentioned. In the present invention, the storage capacitor wiring, which is conventionally arranged for pixels in each row, can be arranged for pixels in every two rows. As a result, the region where the storage capacitor wiring is not arranged between the pixel in the odd-numbered row and the pixel in the even-numbered row can be utilized. The above-mentioned shared additional circuit is arranged in this region, and thereby the aperture ratio can be increased compared with a case where an additional circuit is individually formed in another region in each pixel. Examples of the above-mentioned additional circuit include a photo sensor circuit and a memory circuit.

Examples of a preferable embodiment of the display device of the present invention include and embodiment in which the display device includes a reflective region and a transmissive region in each pixel,
the configuration of the pixel in the odd-numbered row of the n-rows and the configuration of the pixel in the even-numbered row of the n-rows are in an inverse relationship,
the reflective region of the pixel in the odd-numbered row is adjacent to the reflective region of the pixel in the even-numbered row, and
the display device includes a projection formed over adjacent reflective regions of the pixels in the odd-numbered row and in the even-numbered row. If the display device of the present invention is a liquid crystal display device, the above-mentioned projection may be arranged to overlap with the reflective electrode on a substrate where a reflective electrode is arranged, or may be arranged to face the reflective electrode on a substrate that faces a substrate where a reflective electrode is arranged with a liquid crystal layer therebetween. A spacer is typically arranged on a projection that is arranged in a reflective region of a pixel. In such a case, a region where the spacer is arranged is secured, and a margin for misarrangement of the spacer needs to be secured. So it is difficult to downsize the projection, but in this embodiment, the projection can be enlarged without changing the area of the region where the projection is arranged in the pixel, compared with the case where the projection is individually formed in each pixel. As a result, problems that are generated when the projection is formed can be solved, and the area of the reflective region of the pixel can be more decreased, which allows the aperture ratio of the transmissive region to be increased.

If the projection is made of a photosensitive resin by photolithography, for example, the projection is formed to have an inclined side surface, which is a production technique problem. The region on the substrate where this inclined side surface is positioned possible becomes an ineffective region where a desired display is not provided. In the above-mentioned embodiment in which the projection is integrally formed, the area of the ineffective region can be decreased compared with the case where the projection is individually formed in every pixel.

In the present invention, the storage capacitor wiring, which is conventionally arranged for the pixels in the every row, can be arranged for the pixels in every two rows. As a result, the region where the storage capacitor wiring is not arranged between the pixel in the odd-numbered row and the pixel in the even-numbered row can be utilized. Accordingly, it is preferable that the above-mentioned integrated projection is arranged in this region. The above-mentioned projection is arranged in a semi-transmissive liquid crystal display device, generally, in order to decrease the thickness of the liquid crystal layer in the reflective region to uniform the optical path length of the liquid crystal layer between the reflective and transmissive regions.

### EFFECT OF THE INVENTION

According to the display device of the present invention, the area of the region where the storage capacitor wiring is arranged is decreased, which results in an increase in aperture ratio. Instead of or in addition to the decrease in such an area, the line width of the respective storage capacitor wirings is increased, and thereby the electric resistance can be reduced, which leads to suppression of cross talk and the like. In addition, the pattern of the storage capacitor wiring is simplified, leading to an improvement in yield.

### BEST MODES FOR CARRYING OUT THE INVENTION

The present invention is mentioned in more detail below with reference to Embodiments, but not limited thereto. For example, the following Embodiments relate to a liquid crystal display device, but the display device of the present invention is not limited thereto.

### Embodiment 1

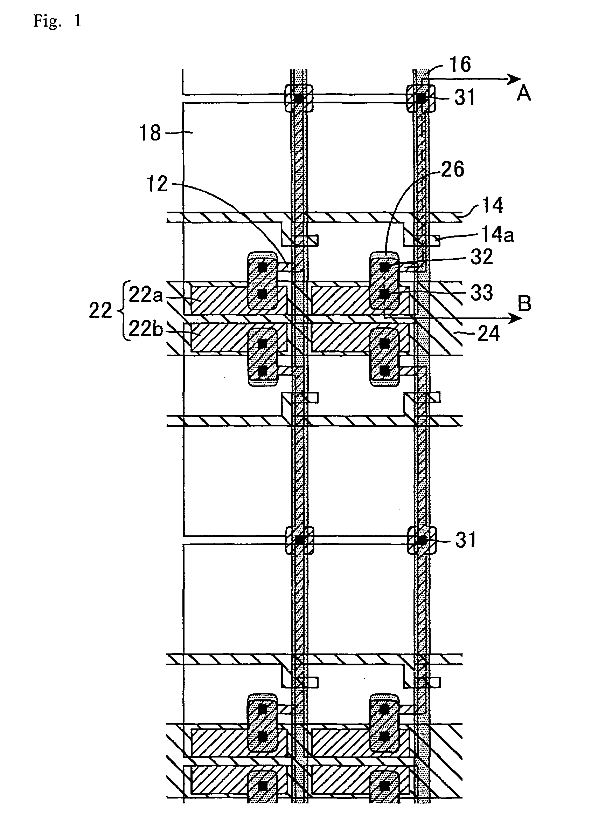

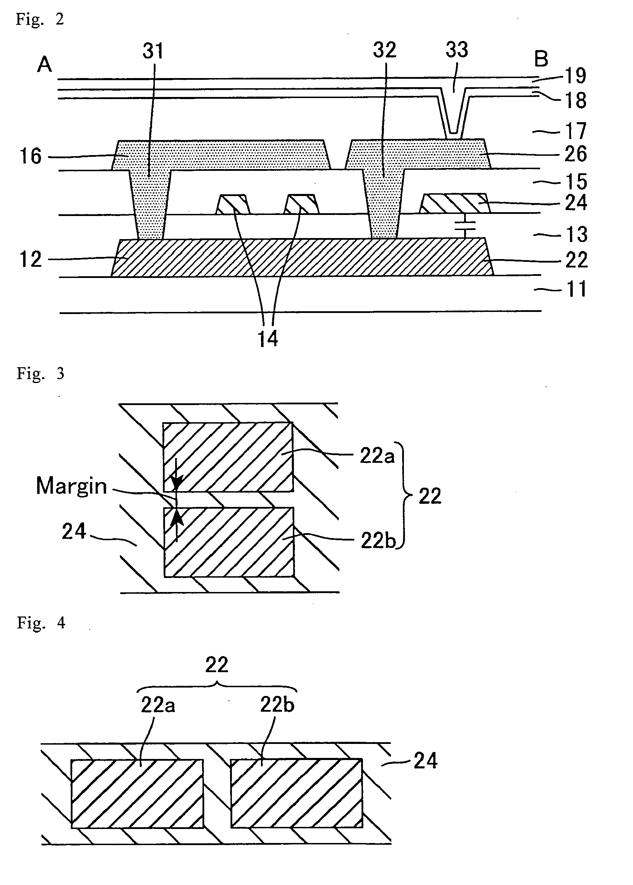

A liquid crystal display device includes a liquid crystal display panel having a liquid crystal layer between a pair of substrates. Such a device provides display by applying a voltage to the liquid crystal layer from electrodes arranged on the substrates, thereby changing alignment of liquid crystal molecules. According to the present Embodiment, driving of pixels is controlled on an active matrix substrate where TFTs (thin film transistors) and pixel electrodes are arranged in respective pixels in a matrix pattern. Fig. 1 is a plan view schematically showing a circuit configuration of pixels on an active matrix substrate in a display device of Embodiment 1. Fig. 2 is a schematic cross-sectional view taken along line A-B of Fig. 1.

As shown in Fig. 1, a TFT and a pixel electrode 18 are arranged in respective pixels on the active matrix substrate. The TFT has a portion that is connected to a source line 16 through a first contact hole 31 on one side of a portion where a TFT semiconductor layer 12 made of silicon overlaps with a gate line 14 with a gate insulating film 13 therebetween. On the other side of the portion, the TFT has a portion that is connected to the pixel electrode 18 through second and third contact holes 32 and 33. A scanning signal is fed through the gate line 14, which allows electrical conduction through the TFT semiconductor layer 12. Then, an image signal fed through the source line 16 is supplied into the pixel electrode 18. The pixel signal fed into the pixel electrode 18 controls alignment of molecules of the liquid crystal layer, and thereby an image is displayed.

According to the present Embodiment, as shown in Fig. 1, a configuration of pixels in an odd-numbered row shown in the upper portion of Fig. 1 and a configuration of pixels in an even-numbered row shown in the middle portion of Fig. 1 are in an inverse relationship. The pixels in the odd-numbered row are symmetry to the pixels in the even-numbered row with respect to a boundary line therebetween. In a boundary region between the pixel in the odd-numbered row and the pixel in the even-numbered row, a storage capacitor electrode 22a for the pixel in the odd-numbered row and a storage capacitor electrode 22b for the pixel in the even-numbered row are arranged close to each other. This allows a storage capacitor wiring 24 shared with the pixels in the odd-numbered and even-numbered rows to be arranged in the boundary region. According to the present Embodiment, for the pixel in the odd-numbered row, the storage capacitor electrode 22a is arranged to overlap with a lower end of the pixel electrode 18, and for the pixel in the even-numbered row, the storage capacitor electrode 22b is arranged to overlap with an upper end of the pixel electrode 18. The storage capacitor wiring 24 is arranged in a region between the electrodes 22a and 22b, and in this region, the wiring 24 overlaps with both of the electrodes 22a and 22b. According to the present Embodiment, the line width of the storage capacitor wiring 24 is increased by a margin in accordance with arrangement accuracy of the storage capacitor electrode 22, in order to prevent a variation in storage capacitor, which might be caused when an arrangement position of the electrode 22 in each pixel varies.

The active matrix substrate in accordance with the present Embodiment has a structure in which the TFT semiconductor layer 12, the gate insulating film 13, the gate line 14, a first interlayer insulating film 15, the source line 16, a second interlayer insulating film 17, the pixel electrode 18, and an alignment film 19 are arranged one above the other in this order from a substrate 11 side, as shown in Fig. 2. In the layer where the TFT semiconductor layer 12 is arranged, the storage capacitor electrode 22 is made of the same material as that for the TFT semiconductor layer 12. In the layer where the gate line 14 is arranged, the storage capacitor wiring 24 is made of the same material as that for the gate line 14. The storage capacitor electrode 22 faces the storage capacitor wiring 24 with the gate insulating film 13 therebetween. The TFT semiconductor layer 12 and the storage capacitor electrode 22 can be simultaneously formed by photolithography. Similarly, the gate line 14 and the storage capacitor wiring 24 can be simultaneously formed by photolithography.

In the present Embodiment, the pixel electrode 18 is formed to have a square shape, and for convenience of explanation, a region where the pixel electrode 18 is arranged in the substrate plane is referred to as a pixel, the direction of the long side of the region is defined as a longitudinal direction, and the direction of the short side of the region is referred to as a transverse direction. The gate line 14 extends in the transverse direction so that it bisects the pixel, and the source line 16 extends in the longitudinal direction between the pixels. The gate line 14 and the source line 16 are perpendicular to each other. The gate line 14 has a branched portion 14a near an intersection to the source line 16. The branched portion 14a also overlaps with the TFT semiconductor layer 12 with the gate insulating film 13 therebetween. Thus, the gate line 14 and the TFT semiconductor layer 12 overlap with each other in each pixel at two positions, including the branched portion 14a. Thus, a dual gate structure is formed.

In Fig. 1, the source line 16 is positioned at an upper right portion of the pixel and electrically connected to the TFT semiconductor layer 12 through a first contact hole 31 that penetrates the first interlayer insulating film 15 and the gate insulating film 13. The TFT semiconductor layer 12 linearly extends along the source line 16, and has a portion (channel) overlapping with the gate line 14 and its branched portion 14a near a middle right end of the pixel, and further bends toward the pixel center at a lower right end of the pixel. The TFT semiconductor layer 12 is electrically connected to an island-shaped conductive portion 26 that is arranged in the same layer as the source-line 16 through a second contact hole 32 that is positioned near a lower right end of the pixel and that penetrates the gate insulating film 13 and the first interlayer insulating film 15. The island-shaped conductive portion 26 is electrically connected to the pixel electrode 18 through a third contact hole 33 that penetrates the second interlayer insulating film 17.

According to the present Embodiment, as shown in Fig. 1, the TFT semiconductor layer for the pixel in the odd-numbered row and the TFT semiconductor layer for the pixel in the even-numbered row are integrally formed. In the present Embodiment, the TFT semiconductor layers 12 for the pixels in the same column are connected to the same source line 16. So the TFT semiconductor layer for the pixel in the odd-numbered row and the TFT semiconductor layer for the pixel in the even-numbered row can be integrally formed. For example, in Fig. 1, the TFT semiconductor layer 12 that is integrally formed over the middle pixel and the lower pixel has a portion that upwardly extends through the first contact hole 31 and that is connected to the pixel electrode 18 for the pixel in the even-numbered row shown in the middle portion of Fig. 1, and also has a portion that downwardly extends through the first contact hole 31 and that is connected to the pixel electrode 18 for the pixel in the odd-numbered row shown in the lower portion of Fig. 1. Thus, the first contact hole 31 is shared between the pixel in the even-numbered row and the pixel in the odd-numbered row. As a result, the number of the contact holes is decreased, and the aperture ratio can be increased. According to the present Embodiment, the storage capacitor wiring 24 is arranged in a boundary region between the pixels in the odd-numbered row shown in the upper portion of Fig. 1 and the pixels in the even-numbered row shown in the middle portion of Fig. 1, and the first contact hole 31 is arranged between the pixel in the odd-numbered row shown in the middle portion of Fig. 1 and the pixel in the even-numbered row shown in the lower portion of Fig. 1. This configuration increases an aperture ratio.

According to the present Embodiment, the storage capacitor electrode 22a for the pixel in the odd-numbered row and the storage capacitor electrode 22b for the pixel in the even-numbered row are aligned in parallel to each other along the extending direction of the storage capacitor wiring 24. The electrodes 22a and 22b may be aligned in series along the extending direction of the storage capacitor wiring 24 when the line width of the wiring 24 is decreased or when the electrodes 22a and 22b are positioned on the long side of the pixel electrodes 18. As shown in Fig. 3, when the electrodes 22a and 22b are aligned in parallel to each other along the extending direction of the wiring 24, a margin according to arrangement accuracy needs to be secured between the electrodes 22a and 22b, and the line width of the wiring 24 might be difficult to decrease. In contrast, when the electrodes 22a and 22b are aligned in series along the extending direction of the wiring 24 shown in Fig. 4, the margin between the electrode 22a and 22b has no influences on the line width of the wiring 24.

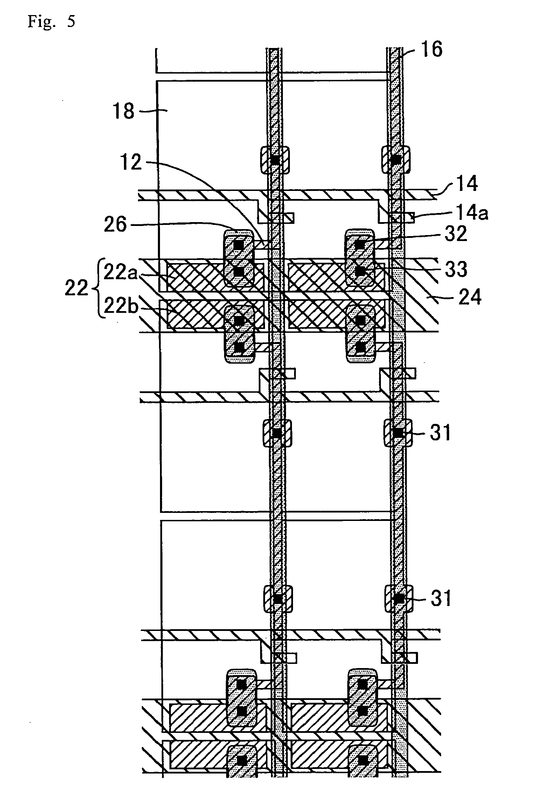

In the present Embodiment, the first contact holes 31 that penetrate the first interlayer insulating film 15 and the gate insulating film 13 and that electrically connects the source line 16 and the TFT semiconductor layer 12 are arranged one for each TFT semiconductor layer 12. As shown in one example in Fig. 5, two or more first contact holes 31 may be arranged for one TFT semiconductor layer 12. In such a case, reliability of electrical connection between the source line 16 and the respective TFT semiconductor layers 12 can be efficiently enhanced.

### Embodiment 2

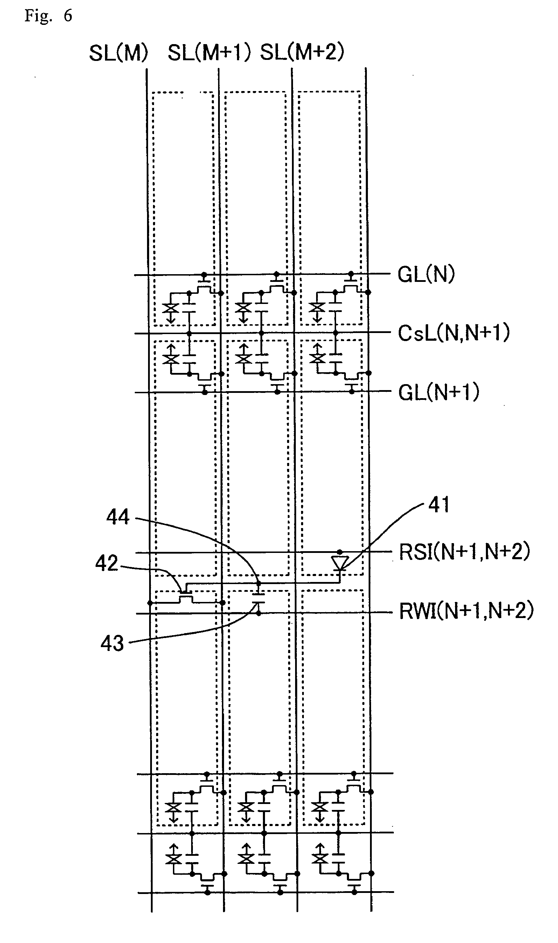

The present Embodiment relates to an embodiment where a storage capacitor wiring is arranged in a boundary region between pixels in an odd-numbered row (Nth row) and pixels in an even-numbered row (N+1th row), and an additional circuit is arranged between the pixels in the even-numbered row (N+1th row) and pixels in the next even-numbered row (N+2th row). Fig. 6 is a schematic plan view of a circuit configuration of pixels, represented by circuit symbols, on an active matrix substrate in a display device in accordance with Embodiment 2. CₛL (N, N+1) represents a storage capacitor wiring for driving pixels in the Nth and N+1th rows; GL (N) and GL (N+1) represent gate lines for driving pixels in the Nth and N+1th rows, respectively; SL (M), SL(M+1), and SL (M+2) represent source lines for driving pixels in the Mth, M+1th, and M+2th rows, respectively.

In the present Embodiment, in a boundary region between the pixels, where no storage capacitor wiring is arranged, a part of an optical sensor circuit is formed as the additional circuit. As shown in Fig. 6, one photodiode 41 is arranged for six pixels (in three rows and two columns). This photodiode 41 converts incident light into an electrical signal. To an anode of the photodiode 41 arranged for the pixel in the N+1th row, reset lines RSI (N+1, N+2) for the pixels in the N+1th and N+2th rows are connected. To a cathode thereof, a gate electrode of a readout TFT 42 is connected. A source electrode of the readout TFT 42 is connected to source line SL (M+1), and a drain electrode is connected to source line SL (M). The wiring connected to the cathode of the photodiode 41 is branched into two at node 44. One branch is connected to the gate electrode of the readout TFT 42, and the other branch forms a capacitor 43 together with a readout control line RWI (N+1, N+2) for the pixels in the N+1th and N+2th rows.

The operation principle of the photo sensor circuit in accordance with the present Embodiment is mentioned below with reference to Fig. 6 and the following Table 1. Table 1 shows one example of a potential change of each portion in the photo sensor circuit. A threshold voltage Vth of the readout TFT 42 is 1 V. In Table 1, "F" represents an electrically floating state.

**[Table 1]**

| | (1) Initialization | (2) sensing | | (3) Readout | |
|---|---|---|---|---|---|
| | | Bright portion | Dark portion | Bright portion | Dark portion |
| RSI (reset line) | -10V→0V→10V | -10V | | -10V | -10V |
| RWI (readout control line) | 10V→0V | 0V | | 0V→10V | |
| node | -10V→0V | 0V→-7V | 0V→-1V | -7V→3V | -1V→9V |
| SL(M+1) (readout reference potential line) | 10V | 10V | | 10V | |
| SL(M) (readout line) | 0V→F | F | | F→2V | F→8V |

### (1) Initialization

By changing a potential of RSI (N+1, N+2) from -10V to 0V, a forward bias potential is applied to the photodiode 41, and the node 44 is reset at 0V. After the reset, the potential of RSI (N+1, N+2) is changed back to -10V.

### (2) Sensing

If an amount of light radiated to the photodiode 41 arranged for the pixel in the (N+1)th row is large, the resistance of the photodiode 41 is significantly decreased, and the potential of the node 44 becomes close to the potential -10V of RSI (N+1, N+2). If the amount is small, the resistance of the photodiode 41 for the pixel in the (N+1)th row is not so decreased, and the potential of the node 44 does not so change from 0V. Thus, among the photodiodes 41 arrayed in a matrix pattern, the resistance of the photodiode 41 that is positioned in a bright region is significantly decreased, and the potential of the node 44 connected to the corresponding photodiode 41 becomes close to the potential of the corresponding RSI. In contrast, the resistance of the photodiode 41 that is positioned in a dark region is not so decreased, and the potential of the node 44 connected to the corresponding photodiode 41 does not so change.

### (3) Readout

By changing a potential of RWI (N+1, N+2) from 0V to 10V, the potential of the node 44 connected to RWI (N+1, N+2) through the capacitor is increased by about 10V. The node 44 is connected to the gate electrode of the readout TFT 42, and so a potential in accordance with that of the node 44 is applied from SL (M+1) to SL (M). That is, when the potential of SL (M) in floating state is increased to a potential corresponding to a value obtained by subtracting the threshold voltage Vth (=1V) of the readout TFT 42 from the potential of the node 44, the readout TFT 42 becomes in an off-state. In this readout, SL (M+1) functions as a readout reference potential line of the photo sensor, and SL (M) functions as a readout line of the photo sensor.

According to the photo sensor circuit of the present Embodiment, the above-mentioned (1) to (3) are periodically repeated. The photo sensor circuit is provided in the display device of the present invention, which enables the device to have a touch panel function, and the like.

In the present Embodiment, storage capacitor wirings, which are conventionally arranged one for pixels in one row, are arranged one for pixels in two rows, and this can create a space. Within this space, an additional space is arranged, which can suppress a reduction in aperture ratio.

### Embodiment 3

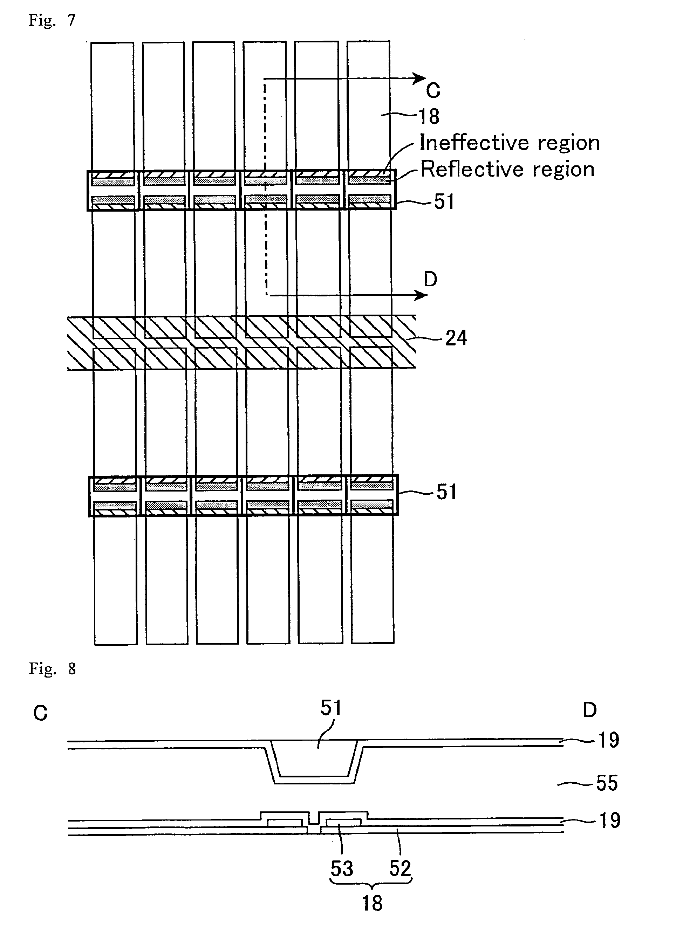

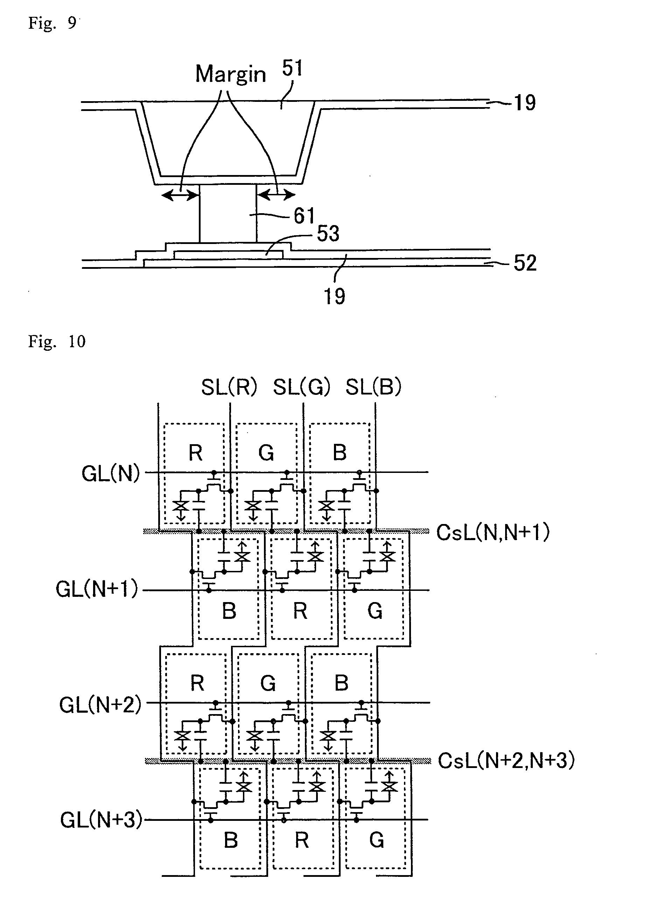

The present Embodiment relates to a semi-transmissive liquid crystal display device. Fig. 7 is a plan view schematically showing a configuration of pixels in the display device of Embodiment 3. Fig. 8 is a schematic cross-sectional view of liquid crystal display panel taken along line C-D of Fig. 7. According to an active matrix substrate of the semi-transmissive liquid crystal display device of the present Embodiment, a pixel electrode 18 is composed of a transmissive electrode 52 which transmits light and a reflective electrode 53 which reflects light that enters from the liquid crystal layer side. The reflective electrode 53 is arranged at one end of a region where the transparent electrode 52 is arranged. The region where the reflective electrode 53 is arranged is a reflective region. The region where no reflective electrode 53 is arranged within the pixel electrode 18 is a transmissive region. In the present Embodiment, as shown in Figs. 7 and 8, a configuration of pixels in an odd-numbered row and a configuration of pixels in an even-numbered row are in an inverse relationship. So a portion where the reflective regions are adjacent and a portion where the transmissive regions are adjacent are alternately positioned in the boundary region between the pixel in the odd-numbered row and the pixel in the even-numbered row. In the portion where the reflective regions are adjacent, a projection 51 that is integrally formed over and face both of the reflective electrode in the pixel in the odd-numbered row and the reflective electrode in the pixel in the even-numbered row is formed in a substrate facing the active matrix substrate. In the portion where the transmissive regions are adjacent, a storage capacitor wiring 24 is formed in the active matrix substrate. The projection 51 is formed to make the thickness of the liquid crystal layer in the reflective region smaller than that of the liquid crystal layer in the transmissive region and to uniform an optical path length between the reflective region and the transmissive region, preferably to reduce the thickness of the liquid crystal layer in the reflective region to half of that of the liquid crystal layer in the transmissive region. According to the present Embodiment, a projection arranged in the reflective region of the pixel in the odd-numbered row and a projection arranged in the reflective region of the pixel in the even-numbered row are integrally formed. So as shown in Fig. 9, the projection is large enough to secure a margin for misarrangement of a spacer 61, and further, in the pixel, the reflective region of the pixel is decreased and thereby a large transmission region can be secured. According to the present Embodiment, the projection 51 can be formed by applying a transparent resin film with a thickness of 1.0 to 3.0 µm by spin coating, slit coating, and the like, and by patterning the film by photolithography. As shown in Fig. 8, the projection 51 has a substantially trapezoidal cross-section. The tapered side surface of the projection 51 is unintentionally formed when being formed by photolithography. In a portion where this side surface is positioned (ineffective region), alignment of the liquid crystal layer can not be sufficiently controlled, and as a result, a desired display could not be performed. In the present Embodiment, however, two pixels share one projection 51, and so the area of the portion where the projection side surface is positioned per pixel is reduced to half. This is advantage to display qualities.

According to the present Embodiment, the projection 51 is arranged in the counter substrate, and it may be arranged in the active matrix substrate. In a color filter-on-array liquid crystal display device, for example, a color filter is arranged in an active matrix substrate including TFTs, wirings, and the like. In such a case, the projection may be arranged in the active matrix substrate.

### Embodiment 4

The present Embodiment shows a case where pixels are arrayed in a delta-pattern. Fig. 10 is a schematic plan view of a circuit configuration of pixels, represented by circuit symbols, on an active matrix substrate in a display device in accordance with Embodiment 4. In Fig. 10, C_{S}L (N, N+1) represents a storage capacitor wiring for driving pixels in the Nth and N+1th rows; C_{S}L (N+2, N+3) represents a storage capacitor wiring for drivingpixels in N+2th, N+3th rows; GL (N), GL (N+1), GL (N+2), and GL (N+3) represent gate lines for driving pixels in Nth, N+1th, N+2th, and N+3th rows, respectively; and SL(R), SL(G), and SL(B) represent source lines for driving red pixels R, green pixels G, and blue pixels B, respectively.

According to the present Embodiment, the red, green, and blue pixels in the Nth row are out of alignment with those in N+1th row by 1.5 pixels. For example, a boundary line between the green pixel and the blue pixel in the Nth row is positioned at an extension of the center line of the red pixel in the N+1th row. Similarly, the red, green, and blue pixels in the N+1th row are out of alignment with those in the N+2th row by 1. 5 pixels. The red, green, and blue pixels in the Nth row are aligned with those in the N+2th row, respectively. Thus, also when the pixels are arrayed in a delta-pattern, as shown in Fig. 10, the configuration of the pixels in the odd-numbered row (for example, Nth and N+2th rows) and the configuration of the pixels in the even-numbered row (for example, N+1th, N+3th rows) are in an inverse relationship, and a storage capacitor wiring that is shared between the pixels in the odd-numbered row and the pixels in the even-numbered row is arranged in a boundary region between these pixels.

The liquid crystal display device of the present invention is not limited to the above-mentioned Embodiments 1 to 4, and various changes and modifications can be made within the scope and spirit of the present invention. For example, the storage capacitor electrode in Embodiments 1 to 4 is positioned in a layer lower than the storage capacitor wiring, but may be positioned in a layer upper than the storage capacitor wiring. In this case, the storage capacitor electrode may be integrally formed with the pixel electrode. That is, an opening is provided with an interlayer insulating film in a region where the storage capacitor electrode is to be formed, and a conductive film is formed over the entire substrate, and as a result, the pixel electrode on the interlayer insulating film and the storage capacitor electrode below the opening of the interlayer insulating film can be integrally formed from the conductive film.

With regard to display mode, the pixel electrodes and the common electrodes may be arranged in different substrates, like in TN (twisted nematic) mode, VA (vertical alignment) mode, and the like, or these electrodes may be arranged in the same substrate, like in IPS (in-plane switching) mode.

In Embodiment 3, the semi-transmissive liquid crystal display device is described, but the liquid crystal display devices of Embodiments 1, 2, and 4 may be a transmissive, reflective, or semi-transmissive liquid crystal display device.

The present application claims priority to Patent Application No. 2007-252180 filed in Japan on September 27, 2007 under the Paris Convention and provisions of national law in a designated State, the entire contents of which are hereby incorporated by reference.

### BRIEF DESCRIPTION OF DRAWINGS

[Fig. 1]
   Fig. 1 is a plan view schematically showing a circuit configuration of pixels on an active matrix substrate in a display device of Embodiment 1.
[Fig. 2]
   Fig. 2 is a schematic cross-sectional view taken along line A-B of Fig. 1.
[Fig. 3]
   Fig. 3 is a schematic plan view of an arrangement relationship between the storage capacitor wiring and the storage capacitor electrode in accordance with one embodiment.
[Fig. 4]
   Fig. 3 is a schematic plan view of an arrangement relationshipbetweenthe storage capacitor wiring and the storage capacitor electrode in accordance with another embodiment.
[Fig. 5]
   Fig. 5 is a plan view schematically showing an active matrix substrate of the display device of Embodiment 1, where the first contact holes for electrically connecting the source line to the TFT semiconductor layer are arranged two for one TFT semiconductor layer.
[Fig. 6]
   Fig. 6 is a schematic plan view of a circuit configuration of pixels, represented by circuit symbols, on an active matrix substrate in a display device in accordance with Embodiment 2.
[Fig. 7]
   Fig. 7 is a plan view schematically showing a configuration of pixels in the display device of Embodiment 3.
[Fig. 8]
   Fig. 8 is a schematic cross-sectional view taken along line C-D of Fig. 7.
[Fig. 9]
   Fig. 9 is a cross-sectional view schematically showing a margin needed when a spacer is arranged at the projection.
[Fig. 10]
   Fig. 10 is a schematic plan view of a circuit configuration of pixels, represented by circuit symbols, on an active matrix substrate in a display device in accordance with Embodiment 4.

### EXPLANATION OF NUMERALS AND SYMBOLS

- 11:: Substrate
- 12:: TFT semiconductor layer
- 13:: Gate insulating film
- 14:: Gate line
- 14a:: Branched portion
- 15:: First interlayer insulating film
- 16:: Source line
- 17:: Second interlayer insulating film
- 18:: Pixel electrode
- 19:: Alignment film
- 22:: Storage capacitor electrode
- 22a:: Storage capacitor electrode for a pixel in an odd-numbered pixel
- 22b:: Storage capacitor electrode for a pixel in an even-numbered pixel
- 24:: Storage capacitor wiring
- 26:: Conductive portion
- 31:: First contact hole
- 32:: Second contact hole
- 33:: Third contact hole
- 41:: Photodiode
- 42:: Readout TFT
- 43:: Capacitor
- 44:: Node
- 51:: Projection
- 52:: Transparent electrode
- 53:: Reflective electrode
- 55:: Liquid crystal layer
- 61:: Spacer

## Claims

1. A display device comprising:
pixels arrayed in a matrix pattern in n-rows and m-columns (n and m being each an integer of 2 or more);
n-source lines; and
m-gate lines,
the n-source lines and the m-gate lines being arranged in a lattice pattern,
wherein a configuration of a pixel in an odd-numbered row of the n-rows and a configuration of a pixel in an even-numbered row of the n-rows are in an inverse relationship,
the display device further includes a storage capacitor wiring shared between the pixel in the odd-numbered row and the pixel in the even-numbered row,
the storage capacitor wiring is arranged in a boundary region between the pixel in the odd-numbered row and the pixel in the even-numbered row, and
the storage capacitor wiring faces a storage capacitor electrode for the pixel in the odd-numbered row and a storage capacitor electrode for the pixel in the even-numbered row, each with an insulating film therebetween.

2. The display device according to Claim 1,
wherein the storage capacitor electrode for the pixel in the odd-numbered row and the storage capacitor electrode for the pixel in the even-numbered row are aligned in series along an extending direction of the storage capacitor wiring.

3. The display device according to Claim 1 or 2,
wherein the display device includes a thin film transistor including a semiconductor layer in each pixel,
the semiconductor layer has a portion overlapping with any one of the m-gate lines,
the semiconductor layer for the pixel in the odd-numbered row and the semiconductor layer for the pixel in the even-numbered row are integrally formed and connected to any one of the n-source lines through a shared contact hole.

4. The display device according to Claim 3,
wherein the shared contact hole is arranged in a boundary region between the pixel in the odd-numbered row and the pixel in the even-numbered row, where the storage capacitor wiring is not arranged.

5. The display device according to any one of Claims 1 to 4,
wherein the display device includes an additional circuit shared between the pixel in the odd-numbered row and the pixel in the even-numbered row, and
the additional circuit being arranged in a boundary region between the pixel in the odd-numbered row and the pixel in the even-numbered row, where the storage capacitor wiring is not arranged.

6. The display device according to any one of Claims 1 to 5,
wherein the display device includes a reflective region and a transmissive region in each pixel,
the configuration of the pixel in the odd-numbered row of the n-rows and the configuration of the pixel in the even-numbered row of the n-rows are in an inverse relationship,
the reflective region of the pixel in the odd-numbered row is adjacent to the reflective region of the pixel in the even-numbered row, and
the display device includes a projection formed over adjacent reflective regions of the pixels in the odd-numbered row and in the even-numbered row.
